# DEMANDE DE BREVET EUROPEEN

(11) **EP 3 757 906 A1**
(43) Date de publication de la demande: **30.12.2020**
(21) Numéro de dépôt: 20182708.6
(22) Date de dépôt: 26.06.2020
(51) Int. Cl.: G06N 3/12

(54) **DÉTERMINATION AUTOMATIQUE DES PARAMÈTRES D'EXÉCUTION D'UNE APPLICATION LOGICIELLE SUR UNE PLATEFORME DE TRAITEMENT DE L'INFORMATION PAR ALGORITHME GÉNÉTIQUE ET AMÉLIORATION DE LA GESTION DU BRUIT**

(30) Priorité: 28.06.2019 FR 1907135
(71) Demandeur: Bull SAS, 78340 Les Clayes-sous-Bois (FR)
(72) Inventeur: ROBERT, Sophie, 38190 Les Adrets (FR); GORET, Gaël, 38140 La Murette (FR); ZERTAL, Soraya, 92330 Sceaux (FR)
(74) Mandataire: Novagraaf Technologies

(57) **Abrégé**

Procédé pour l'optimisation des paramètres d'exécution d'une application logicielle sur une plateforme de traitement de l'information, consistant à optimiser de façon itérative lesdits paramètres à chaque exécution de ladite application, dans lequel pour chaque exécution de ladite application (11),
- on détermine un ensemble desdits paramètres et on détermine un temps d'exécution de ladite application avec lesdits paramètres, et on stocke une association entre ledit ensemble et ledit temps d'exécution afin de former un historique (25) ; et, dans lequel
- on détermine ledit ensemble en mettant en œuvre un algorithme génétique d'optimisation comprenant une étape (21) consistant à sélectionner deux ensembles de paramètres parmi ledit historique ; une étape (22) consistant à créer un nouvel ensemble de paramètres par recombinaison desdites deux ensembles de paramètres ; et une étape (23) de mutation aléatoire dudit nouvel ensemble de paramètres.

## Description

### DOMAINE DE L'INVENTION

L'invention concerne le domaine de l'optimisation du temps d'exécution d'applications logicielles sur des plateformes de traitement de l'information.

Elle s'applique particulièrement bien au domaine du calcul à haute performance et des supercalculateurs et notamment de leurs évolutions vers l'« exascale ».

### CONTEXTE DE L'INVENTION

L'évolution de taille et la complexité croissante des plateformes de traitement de l'information actuelles impliquent déjà un changement de paradigme dans leur utilisation et dans leur administration. En effet, de plus en plus, l'intervention humaine se révèle difficile au vu de la quantité d'information impliquée dans le maintien d'un état de fonctionnement optimal.

De plus, les futurs calculateurs exascale, c'est-à-dire visant une puissance de l'ordre de l'exa-flop, intégreront un nombre beaucoup plus élevé de nœuds de calcul, et les méthodes d'accès aux données actuelles de type systèmes de fichiers parallèles POSIX impliquant une cohérence forte des données et dont la mise à l'échelle est assez limitée, ne seront plus utilisables.

Des solutions alternatives existent. Certaines cherchent à étendre le modèle POSIX : on peut notamment citer les technologies de type « burst buffers », telles que décrites dans N. Liu, J. Cope, P. Carns, C. Carothers, R. Ross, G. Grider, A. Crume and C. Maltzahn. « On the role of burst buffers in leadership-class storage systems", in IEEE 28th Symposium on Mass Storage Sytems and Technologies (MSST), 2012,

D'autres solutions proposent d'autres modèles d'accès, telles que le stockage objet, décrit par exemple dans M. Mesnier, G. R. Ganger, and E. Riedel. « Object-based storage », in IEEE Communications Magazine, 41(8):84-90, 2003, ou DAOS, décrit par exemple dans Breitenfeld, M. Scot, et al. "DAOS for Extreme-scale Systems in Scientific Applications", in arXiv preprint arXiv:1712.00423, 2017

Cependant, ces solutions alternatives impliquent une mise en œuvre à la demande, avec des paramètres spécifiques adaptés au comportement des applications pour lesquelles elles seront instanciées. L'état de l'art aujourd'hui est que ce paramétrage est entièrement manuel, à la charge des utilisateurs qui n'ont que très rarement les compétences pour le définir.

Pour rendre cette automatisation possible, il sera donc indispensable d'avoir une compréhension très fine du comportement des applications, afin d'appliquer les stratégies d'accélération d'entrées-sorties les plus pertinentes, et participer ainsi à l'optimisation du fonctionnement du supercalculateur.

En outre, la taille très importante de l'espace des paramètres et leur intrication avec le contexte d'exécution rend le paramétrage complet trop consommateur de temps pour être une solution viable.

### RESUME DE L'INVENTION

Le but de la présente invention est de fournir un procédé et un système palliant au moins partiellement les inconvénients précités.

Notamment, l'invention permet de s'abstraire de toutes connaissances sur les applications et sur leurs comportements et de ne pas se baser sur des a priori sur les données à considérer. Dans la mesure où les applications à considérer peuvent être très hétérogènes dans leurs comportements, il peut être en effet extrêmement compliqué de modéliser leur comportement particulier. L'invention met ainsi en œuvre un mécanisme de type "boîte noire", et propose ainsi une plus grande facilité d'utilisation et un plus grand champ d'application.

Plus particulièrement, l'invention vise à fournir une optimisation de l'exécution des applications logicielles qui soit automatisée, c'est-à-dire qui minimise, voire rend non-indispensable, l'intervention humaine dans le paramétrage de l'exécution de l'application.

A cette fin, la présente invention propose un procédé pour l'optimisation des paramètres d'exécution d'une application logicielle sur une plateforme de traitement de l'information, consistant à optimiser de façon itérative lesdits paramètres à chaque exécution de ladite application, dans lequel pour chaque exécution de ladite application,
- on détermine un ensemble desdits paramètres et on détermine un temps d'exécution de ladite application avec lesdits paramètres, et on stocke une association entre ledit ensemble et ledit temps d'exécution afin de former un historique ; et, dans lequel
- on détermine ledit ensemble en mettant en œuvre un algorithme génétique d'optimisation comprenant une étape consistant à sélectionner deux ensembles de paramètres parmi ledit historique ; une étape consistant à créer un nouvel ensemble de paramètres par recombinaison desdites deux ensembles de paramètres ; et une étape de mutation aléatoire dudit nouvel ensemble de paramètres.

Suivant des modes de réalisation préférés, l'invention comprend une ou plusieurs des caractéristiques suivantes qui peuvent être utilisées séparément ou en combinaison partielle entre elles ou en combinaison totale entre elles :
- on effectue une pluralité d'exécutions de ladite application avec un même ensemble de paramètres, et on détermine un temps d'exécution en fonction de ladite pluralité d'exécution pour ledit ensemble de paramètres ;
- ledit ensemble de paramètres est le nouvel ensemble de paramètres déterminé par l'étape de mutation aléatoire ;
- le temps d'exécution déterminé est la valeur moyenne des temps d'exécutions pour ladite pluralité d'exécutions ;
- le procédé comporte en outre une étape de lissage par régression des temps d'exécutions en fonction des ensembles de paramètres stockés dans ledit historique ;

Un autre aspect de l'invention concerne un dispositif pour l'optimisation des paramètres d'exécution d'une application logicielle sur une plateforme de traitement de l'information, consistant à optimiser de façon itérative lesdits paramètres à chaque exécution de ladite application, dans lequel pour chaque exécution de ladite application, ledit dispositif étant configuré pour
- déterminer un ensemble desdits paramètres, déterminer un temps d'exécution de ladite application avec lesdits paramètres, et on stocke une association entre ledit ensemble et ledit temps d'exécution afin de former un historique ; et, dans lequel
- déterminer ledit ensemble en mettant en œuvre un algorithme génétique d'optimisation en sélectionnant deux ensembles de paramètres parmi ledit historique ; créant un nouvel ensemble de paramètres par recombinaison desdites deux ensembles de paramètres ; et effectuant une mutation aléatoire dudit nouvel ensemble de paramètres.

.Suivant des modes de réalisation préférés, le dispositif selon l'invention comprend une ou plusieurs des caractéristiques suivantes qui peuvent être utilisées séparément ou en combinaison partielle entre elles ou en combinaison totale entre elles :
- Le dispositif comporte en outre des moyens pour effectuer une pluralité d'exécutions de ladite application avec un même ensemble de paramètres, et déterminer un temps d'exécution en fonction de ladite pluralité d'exécution pour ledit ensemble de paramètres ;
- ledit ensemble de paramètres est le nouvel ensemble de paramètres déterminé à l'issue de ladite mutation aléatoire ;
- le temps d'exécution déterminé est la valeur moyenne des temps d'exécutions pour ladite pluralité d'exécutions ;
- le dispositif comporte en outre des moyens pour lisser par régression des temps d'exécutions en fonction des ensembles de paramètres stockés dans ledit historique.

Un autre aspect de l'invention concerne un programme d'ordinateur comportant des moyens logiciels adaptés à la mise en œuvre du procédé tel que précédemment décrit, lorsque que déclenché par une plateforme de traitement de l'information.

Un avantage supplémentaire de l'invention est de fournir une solution permettant de fonctionner en temps réel, c'est-à-dire d'être déclencher pour optimiser toute nouvelle demande d'exécution d'une application, en tirant profit de l'historique, sans nécessiter de traitement supplémentaire retardant cette exécution. Le procédé selon l'invention peut ainsi fonctionner en ligne. L'invention peut également être utilisée afin de construire un historique, ou pour inférer sur un historique existant afin de fournir de meilleures réponses lors d'une prochaine demande d'exécution d'une application.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La [Fig. 1] illustre schématiquement un contexte dans lequel est susceptible d'être mis en œuvre un mode de réalisation de l'invention.
La [Fig. 2] représente schématiquement et de façon fonctionnelle la boucle d'optimisation selon un mode de réalisation de l'invention.

### DESCRIPTION DETAILLEE DE L'INVENTION

L'invention vise à minimiser le temps d'exécution d'une application à haute performance (c'est-à-dire de type « HPC »). Pour ce faire, le problématique est de trouver l'ensemble optimal des paramètres d'exécution permettant ce temps d'exécution minimal.

Dans la suite, on appellera « job », ou « travail », une représentation abstraite constitué d'un ensemble de métadonnées qui définissent les modalités d'exécution d'une application sur une plateforme de traitement de l'information. Ces métadonnées comprennent notamment :
- un identifiant de l'application (nom du binaire exécutable, information provenant de l'outil d'exécution des applications sur un supercalculateur, fichiers accédées, etc.),
- la topologie matérielle utilisée (calcul et stockage),
- des paramètres du contexte d'exécution, et en particulier les paramètres d'optimisation des interfaces d'entrées-sorties associés à cette application logicielle.

Comme précédemment évoqué, l'invention permet de s'abstraire de toutes connaissances sur les applications et sur leurs comportements et de ne pas se baser sur des a priori sur les données à considérer.

Dans la mesure où les applications à considérer peuvent être très hétérogènes dans leurs comportements, il peut être en effet extrêmement compliqué de modéliser leur comportement particulier. L'invention vise ainsi à mettre en œuvre un mécanisme dans lequel l'application à exécuter (« job ») est considéréecomme une "boîte noire".

En informatique, une « boite noire » est un système ou un objet qui peut n'être considéré qu'en terme d'entrées et de sorties, sans connaissance de son comportement interne. Ce concept est clairement compris par l'homme du métier. On peut également se référer à la page wikipedia : https://en.wikipedia.org/wiki/Black_box

L'invention permet ainsi une plus grande facilité d'utilisation et peut être mise en œuvre pour un plus grand domaine d'applications.

Il apparaît que les applications à haute performance (HPC pour "*High Performance Computing*") consacrent une partie importante de leur temps d'exécution à effectuer des entrées/sorties. Les volumes de données qui sont traités représentent en eux-mêmes la cause principale : les réseaux utilisés pour échanger les données ayant une bande passante finie, les temps d'écriture et de lecture ne pourront être inférieurs à des minima théoriques.

Il est intéressant de s'intéresser plus particulièrement aux performances d'entrées/sorties dès lors que l'on s'intéresse aux applications à haute performance.

Les inventeurs considèrent que les méthodes de type "boîte noire" sont très intéressantes pour fournir des solutions au problème générale de l'optimisation des paramètres d'exécution (donc des paramètres d'entrées/sorties, en particulier) pour les applications à haute performance.

Différentes approches ont été étudiées parmi lesquelles le recuit simulé, les modèles de substitution, les algorithmes génétiques...

Il a été expérimentalement constaté lors de plusieurs études approfondies que les algorithmes génétiques présentaient le meilleur comportement parmi les approches étudiées lorsqu'ils étaient utilisés dans une boucle d'auto-optimisation itérative, selon plusieurs critères bien définis.

Toutefois, d'une façon générale, les approches d'optimisation par boite noire reposent sur le préconçu que le phénomène à optimiser est déterministe, c'est-à-dire qu'à deux exécutions (ou "*run*") d'une même application (même application, même paramètre d'exécution) correspondraient des mesures de performances identiques (temps d'exécution...).

Or, a fortiori, dans le cadre d'applications à hautes performances, cela n'est pas le cas. En effet, pour un « job » donné, deux exécutions (ou « *runs* ») donneront des comportements différents, qui peuvent être liés à des accès concurrents aux données, à l'utilisation des ressources de traitement par d'autres exécutions d'application, etc.

En conséquence, l'invention se base sur un algorithme génétique, mais adapté afin de prendre en compte cette nature stochastique, ou bruitée, des données à traiter.

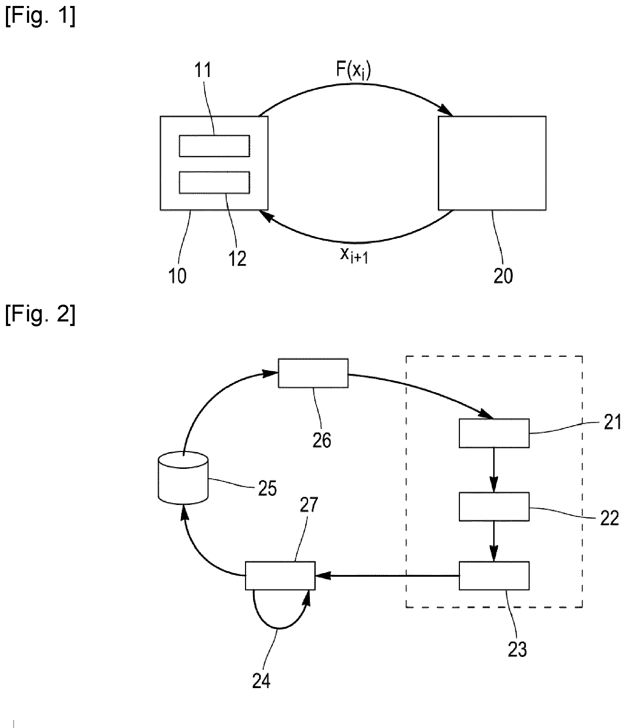

La figure 1 illustre de façon très schématique une architecture selon une mise en œuvre de l'invention. On considère un ensemble 10 d'exécutions d'une application 11 selon un ensemble de paramètres d'exécution. Cet ensemble de paramètres d'exécution peut être associé à un outil 12 de type « *burst buffer ».*

Chaque exécution est surveillée afin de recueillir une mesure d'un indicateur de performance, tel qu'un temps d'exécution, et le fournir à un module d'optimisation 20.

L'application 11 est exécutée plusieurs fois afin de permettre une optimisation incrémentale des paramètres d'exécution.

On note xᵢ l'ensemble des paramètres d'exécution pour l'exécution d'indice i de l'application 11. On note f(xᵢ) le temps d'exécution intrinsèque de l'application 11 avec le paramétrage xᵢ. On appellera par la suite « paramétrage », l'ensemble des paramètres d'exécution (avec leur valeur), utilisé pour une exécution de l'application11.

Toutefois, comme nous l'avons vu, il existe un bruit lié à des phénomènes extérieurs à l'application (accès concurrents, etc.) qui fait que le temps d'exécution réel ne dépend pas que de l'ensemble des paramètres. Cette contribution « externe » peut être vue comme un bruit ε(xᵢ) qui peut dépendre des paramètres xᵢ (en effet, on peut concevoir que certains phénomènes peuvent être plus ou moins prégnants en fonction de certains paramètres d'exécution).

Dès lors, la mesure de performance F(xᵢ) reçue par le module d'optimisation 20 est une superposition du temps d'exécution intrinsèque et de ce bruit : [math. 1] $F \left(xi\right) = f \left(xi\right) + ε \left(xi\right)$

Le problème peut alors être formulé comme la minimisation de l'espérance de la fonction F(xᵢ) sur l'ensemble des paramétrages xᵢ possibles, c'est-à-dire la recherche de la paramétrisation qui retourne en moyenne le temps minimal d'exécution.

Selon un aspect de l'invention, le module d'optimisation 20 met en œuvre un algorithme génétique.

Les algorithmes génétiques sont un type d'algorithme évolutif qui vise à imiter la sélection naturelle. La page Wikipédia suivante en donne un descriptif assez complet quoi que de haut niveau, mais en tout cas suffisante pour la compréhension de l'invention : https://en.wikipedia.org/wiki/Genetic_algorithm

Typiquement, un algorithme génétique peut se décomposer en trois phases : une phase de sélection, une phase de recombinaison (ou « cross over ») et une phase de mutation.

L'algorithme se présente sous la forme d'un procédé itératif à partir d'un premier ensemble de paramétrages, pour lesquels un temps d'exécution est disponible. Au fil de l'algorithme, cet ensemble de paramétrages va être enrichi, ainsi qu'illustré sur la figure 2.

Cette figure 2 illustre les étapes permettant l'optimisation des paramètres d'exécution d'une application logicielle, selon un mode de réalisation de l'invention. Ces étapes peuvent être mises en œuvre par le module d'optimisation 20 en collaboration avec l'application 11 (étape 24). La figure montre clairement le caractère itératif du procédé qui est constitué d'une boucle d'auto-optimisation : la solution d'optimisation est approchée de façon itérative. On comprend que plus l'on fournit d'exécutions de l'application, meilleure pourra être l'optimisation fournie par le module d'optimisation 20.

Dans cet exemple de la figure 2, l'algorithme génétique est constitué des étapes de sélection 21, de réplication ou recombinaison (ou encore « enjambement ») 22 et de mutation 23.

Lors d'une étape 21, à chaque itération, deux paramétrages sont sélectionnés parmi l'ensemble des paramétrages connus pour être recombinés (tels deux chromosomes) afin de former un nouveau paramétrage lors de l'étape suivante de recombinaison 22.

Différents paradigmes peuvent être utilisés pour la sélection d'un couple de paramétrages. En général, on vise à sélectionner deux paramétrages associés à des bonnes mesures de performance (inverse du temps d'exécution), selon le principe qu'à chaque itération, on favorise les « bonnes » données de l'échantillon considéré et écarte les « mauvaises » données.

Les méthodes de sélection peuvent être celles de de l'état de la technique dans le domaine. Des exemples de méthodes de sélection comprennent :

Sélection par rang : Cette technique de sélection choisit toujours les paramétrages possédant les meilleurs temps d'exécution, le hasard n'entre donc pas dans ce mode de sélection. En fait, si n paramétrages constituent la population, la sélection appliquée consiste à conserver les k meilleurs paramétrages suivant une probabilité qui dépend du rang (et pas du temps d'exécution).

Probabilité de sélection proportionnelle à l'adaptation : Appelé aussi « roulette » ou « roue de la fortune », pour chaque paramétrage, la probabilité d'être sélectionné est proportionnelle à sa mesure de performance (c'est-à-dire à l'inverse de son temps d'exécution). Afin de sélectionner un paramétrage, on utilise le principe de la roue de la fortune biaisée. Cette roue est une roue de la fortune classique sur laquelle chaque paramétrage est représenté par une portion proportionnelle à sa mesure de performance. On effectue ensuite un tirage au sort homogène sur cette roue.

Sélection par tournoi : Cette technique utilise la sélection proportionnelle sur des paires de paramétrages, puis choisit parmi ces paires, le paramétrage qui a la meilleure mesure de performance (c'est-à-dire le temps d'exécution le plus petit).

Sélection uniforme : La sélection se fait aléatoirement, uniformément et sans intervention de la mesure de performance. Chaque paramétrage a donc une probabilité 1/P d'être sélectionné, où P est le nombre total de paramétrages dans la population.

Dans une étape 22, on recombine ces deux paramétrages sélectionnés (appelés « parents ») pour en créer un nouveau, dit « enfant ». Ce nouveau paramétrage est donc composé de deux parties, chacune provenant d'un des deux paramétrages parents.

Différentes méthodologies de recombinaison peuvent être utilisées.

Selon un premier exemple, chaque paramétrage est arbitrairement divisé en deux parties de la même façon. On note {p_{1,1}, p_{1,2}... p_{1,N}} l'ensemble des N paramètres du paramétrage P₁, et {p_{2,1}, p_{2,2}... p_{2,N}}, l'ensemble des N paramètres du paramétrage P₂. On tire au hasard un nombre i entre 1 et N et on divise chaque paramétrage P₁, P₂ en deux parties de part et d'autre de cet indice. On obtient alors, respectivement: {p_{1,1}, p_{1,2}... p_{1,i}}, {p_{1,i+1}, ... p_{1,N}} et {p_{2,1}, p_{2,2}... p_{2,i}}, {p_{2,i+1}, ...p_{2,N}}. Ces parties sont combinées ensemble afin de reformer un nouveau paramétrage. Il peut par exemple s'agir d'un nouveau paramétrage constituée de la première partie du paramétrage P₁ et de la seconde partie du paramétrage P₂ : {p_{1,1}, p_{1,2}... p_{1,i,} p_{2,i+1}, ... p_{2,N}}.

Un second exemple est appelé recombinaison à n points. Il consiste à découper les paramétrages parents en n parties et de former le paramétrage fils en concaténant les parties provenant, alternativement, de chaque parent.

L'étape suivante est l'étape de mutation 23. Cette étape consiste à décider de façon aléatoire si une modification, également aléatoire, doit être effectuée sur le paramétrage fils issue de l'étape de recombinaison. Cette étape permet d'explorer de nouvelles possibilités de paramétrage et d'éviter des blocages dans des minima locaux de la fonction à optimiser (le temps d'exécution).

Différentes méthodologies sont possibles pour réaliser cette mutation. Il est notamment possible d'effectuer une marche aléatoire (ou « *random walk* » selon la terminologie en langue anglaise) en modifiant un des paramètres, choisi aléatoirement, en une valeur voisine dans l'espace des valeurs pris par ce paramètre.

Ainsi, l'étape de sélection permet d'exploiter les connaissances existantes sur les liens entre l'espace paramétrique et le temps d'exécution, tandis que l'étape de mutation permet d'explorer de nouvelles possibilités afin d'améliorer la bonne convergence du processus itératif d'optimisation.

Le nouveau paramétrage est alors évalué en exécutant l'application, en étape 27. Son temps d'exécution peut ensuite être stocké dans une mémoire d'historique 25, en association avec ce nouveau paramétrage. L'historique 25 est ainsi enrichi d'un nouveau « point » de données.

Initialement, les algorithmes génétiques ont été développés afin de répondre à des problématiques d'optimisation de fonctions déterministes. Néanmoins, des expérimentations ont démontré qu'ils pouvaient s'appliquer également à l'optimisation de fonctions stochastiques (ou bruités) et permettre néanmoins une convergence vers un optimum.

Selon un mode de réalisation, on adjoint à cet algorithme génétique des mécanismes permettant d'améliorer encore les performances du processus itératif d'optimisation dans le contexte bruité de l'optimisation du temps d'exécution d'une application à haute performance.

Plusieurs mécanismes peuvent être mis en œuvre. Selon un mode de réalisation, ceux-ci peuvent se classer dans deux catégories :
- une première famille 24 de méthodes consiste à ré-échantillonner certains paramétrages ;
- une seconde famille 26 de méthodes consiste à effectuer une approximation de la fonction donnant le temps d'exécution en fonction du paramétrage, notamment par régression, afin d'accroitre le volume de données pouvant être exploité par l'algorithme génétique.

Ces deux familles de méthodes peuvent être mises en œuvre indépendamment l'une de l'autre, et d'autres familles de méthodes peuvent également être mises en place, à la place ou en sus de celles-ci.

Ainsi, selon un premier mode de réalisation, une méthode de la première famille 24 est mise en place. Selon un deuxième mode de réalisation, une méthode de la deuxième famille 26 de méthodes est mise en place. Selon un troisième mode de réalisation, à la fois une méthode de la première famille et une méthode de la deuxième famille sont mises en place.

Une première famille 24 de méthodes consiste à ré-échantilloner un paramétrage donné. On entend ici par « ré-échantillonage », une réévaluation du temps d'exécution de l'application à plusieurs reprises sur la base de ce même paramétrage.

Ainsi, en réévaluant plusieurs fois le même fonction F(x) donnant le temps d'exécution en fonction du paramétrage, on peut minimiser l'influence du bruit et obtenir une meilleure compréhension de l'influence du paramétrage sur le temps d'exécution. On effectue donc une pluralité d'exécution de l'application avec ce même paramétrage.

Ainsi, on peut estimer le temps d'exécution f(x) et la fonction f au « point » x, par l'évaluation *F̅*(*x*) fournie par l'équation suivante, dans laquelle n est le nombre d'évaluation du même paramétrage x, et qui donne une valeur moyenne sur cet échantillon n : [math. 2] $\overline{F} \left(x\right) = \frac{1}{n} {\sum }_{i = 1}^{n} F \left(x\right)$

Plusieurs stratégies sont possibles pour sélectionner le paramétrage qui doit être réévalué.

Lorsqu'on est dans un mode de fonctionnement temps-réel, c'est-à-dire quand il s'agit de traiter de façon dynamiquement les exécutions de l'application, le paramétrage à réévaluer est le paramétrage courant, c'est-à-dire celui issue de l'algorithme génétique.

Dans d'autres situations, on peut envisager de réévaluer d'autres paramétrages parmi ceux de l'historique des exécutions.

On peut citer deux exemples de stratégies, à la fois simples et efficaces. Ces deux stratégies se basent sur la supposition que le bruit ε(xᵢ) suit une loi gaussienne 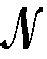 (0, σ(x)), où σ(x) représente la variance. Ainsi, l'erreur standard de la moyenne pour le paramètre x, qui correspond à la déviation standard de l'estimateur moyenné *F̅*(*x*) est égale à $\frac{σ \left(x\right)}{\sqrt{n}} .$

Comme la valeur de σ(x) est inconnue, elle ne peut être qu'estimé par un estimateur non biaisé *σ̂*(*x*) donné par l'expression suivante : [math. 3] $\hat{σ} \left(x\right) = \sqrt{\frac{1}{n - 1}} {\sum }_{i = 1}^{n} \left(F\left(x\right)-\overline{F}\left(x\right)\right)$

Une première stratégie consiste alors de calculer plusieurs fois le temps d'exécution pour le paramétrage x sélectionné, quel que soit sa valeur.

Une seconde stratégie consiste à faire dépendre le nombre de fois que le temps d'exécution est mesuré pour un même paramétrage d'une estimation du bruit pour ce paramétrage. Cette estimation peut être se baser sur l'erreur standard. A chaque itération, on peut comparer l'erreur standard recalculée avec un seuil prédéfini et terminer la boucle de ré-échantillonnage lorsque l'erreur standard devient inférieure au seuil.

Ces deux stratégies nécessitent la fixation de paramètres tels que le nombre n d'itération de la boucle de ré-échantillonnage et le seuil pour le critère d'arrêt.

Selon un mode de réalisation de l'invention, ces paramètres sont fixés par une méthode originale, comprenant l'estimation de la moyenne *µ̂* et la variance *σ̂* sur les points d'initialisation de l'algorithme génétique, et en fixant l'erreur standard se du seuil moyen a un certain pourcentage p de la moyenne estimée : *se* = *p* × *µ̂*

Dans le cas d'un ré-échantillonnage simple (première stratégie exposée plus haut), puisque [math. 4] $se = \frac{σ}{\sqrt{n}} .$ On peut fixer [math. 5] $n = \frac{\hat{{σ}^{2}}}{{p}^{2} \times \hat{{µ}^{2}}}$

Une seconde famille 26 de méthodes pour améliorer les performances du processus itératif d'optimisation dans le contexte bruité de l'optimisation du temps d'exécution d'une application à haute performance consiste à effectuer une approximation de la fonction donnant le temps d'exécution en fonction du paramétrage, notamment par régression.

La régression permet d'utiliser les points déjà déterminés qui associent donc un temps d'exécution à un paramétrage pour estimer le temps d'exécution pour chaque paramétrage possible et d'ainsi permettre un lissage des valeurs obtenues, de façon « brute », des étapes précédentes. Ainsi, la valeur « brute » peut être remplacée par une valeur représentant une estimation basée sur les valeurs de temps d'exécution obtenues pour d'autres paramétrages.

Il existe différentes façons d'effectuer cette régression.

Notamment, différentes portions de l'historique peuvent être utilisés pour la régression. Tout l'historique (c'est-à-dire l'ensemble des paramétrages déjà évalués) ou bien un voisinage du paramétrage à estimer, peuvent être utilisés pour effectuer cette régression. Un des avantages de la régression locale est que la supposition faite sur la régression sur la fonction donnant le temps d'exécution n'a besoin d'être correcte que de façon locale.

Si Nₓ est un voisinage du paramétrage x and g_{Nx} un régresseur entrainé sur ce voisinage, la fonction f(x) peut être estimée par l'expression : [math. 6] $f \hat{□} \left(x\right) = g_Nx \left(x\right)$

Plusieurs techniques de régression peuvent être mise en œuvre. On peut notamment citer la moyenne pondérée et le processus de régression gaussien (ou régression de Kriging).

La régression permet ainsi d'accroitre le volume de données pouvant être exploité par l'algorithme génétique pour effectuer les sélections 21 de deux paramétrages.

Ainsi, la boucle d'itération 21-26 permet d'affiner la connaissance du comportement de l'application en fonction de ses paramétrages possibles. Les étapes 21-23 permettent d'explorer de nouveaux paramétrages et de converger, de façon itérative, vers des paramétrages fournissant des meilleures solutions, c'est-à-dire des temps d'exécution plus courts.

Les étapes 24 et 26 permettent d'améliorer la robustesse du processus global au bruit formé par les aléas de l'exécution d'une application sur une plateforme de traitement.

## Revendications

1. Procédé pour l'optimisation des paramètres d'exécution d'une application logicielle sur une plateforme de traitement de l'information, consistant à optimiser de façon itérative lesdits paramètres à chaque exécution de ladite application, dans lequel pour chaque exécution de ladite application (11),
- on détermine un ensemble desdits paramètres et on détermine un temps d'exécution de ladite application avec lesdits paramètres, et on stocke une association entre ledit ensemble et ledit temps d'exécution afin de former un historique (25) ; et, dans lequel
- on détermine ledit ensemble en mettant en œuvre un algorithme génétique d'optimisation comprenant une étape (21) consistant à sélectionner deux ensembles de paramètres parmi ledit historique ; une étape (22) consistant à créer un nouvel ensemble de paramètres par recombinaison desdites deux ensembles de paramètres ; et une étape (23) de mutation aléatoire dudit nouvel ensemble de paramètres.

2. Procédé selon la revendication précédente, dans lequel, on effectue (24) une pluralité d'exécutions de ladite application avec un même ensemble de paramètres, et on détermine un temps d'exécution en fonction de ladite pluralité d'exécution pour ledit ensemble de paramètres.

3. Procédé selon la revendication précédente, dans lequel ledit ensemble de paramètres est le nouvel ensemble de paramètres déterminé par l'étape (23) de mutation aléatoire.

4. Procédé selon l'une des revendications précédentes, dans lequel le temps d'exécution déterminé est la valeur moyenne des temps d'exécutions pour ladite pluralité d'exécutions.

5. Procédé selon l'une des revendications précédentes, comprenant en outre une étape (26) de lissage par régression des temps d'exécutions en fonction des ensembles de paramètres stockés dans ledit historique (25).

6. Dispositif pour l'optimisation des paramètres d'exécution d'une application logicielle sur une plateforme de traitement de l'information, consistant à optimiser de façon itérative lesdits paramètres à chaque exécution de ladite application, dans lequel pour chaque exécution de ladite application (11), ledit dispositif étant configuré pour
- déterminer un ensemble desdits paramètres, déterminer un temps d'exécution de ladite application avec lesdits paramètres, et on stocke une association entre ledit ensemble et ledit temps d'exécution afin de former un historique (25) ; et, dans lequel
- déterminer ledit ensemble en mettant en œuvre un algorithme génétique d'optimisation en sélectionnant (21) deux ensembles de paramètres parmi ledit historique ; créant (22) un nouvel ensemble de paramètres par recombinaison desdites deux ensembles de paramètres ; et effectuant (23) une mutation aléatoire dudit nouvel ensemble de paramètres.

7. Dispositif selon la revendication précédente, comportant en outre des moyens pour effectuer (24) une pluralité d'exécutions de ladite application avec un même ensemble de paramètres, et déterminer un temps d'exécution en fonction de ladite pluralité d'exécution pour ledit ensemble de paramètres.

8. Dispositif selon la revendication précédente, dans lequel ledit ensemble de paramètres est le nouvel ensemble de paramètres déterminé à l'issue de ladite mutation aléatoire.

9. Dispositif selon l'une des revendications 6 à 8, dans lequel le temps d'exécutions déterminé est la valeur moyenne des temps d'exécution pour ladite pluralité d'exécutions.

10. Dispositif selon l'une des revendications 6 à 9, comprenant en outre des moyens pour lisser par régression des temps d'exécutions en fonction des ensembles de paramètres stockés dans ledit historique (25).
